# EUROPEAN PATENT APPLICATION

(11) **EP 0 969 338 A1**
(43) Date of publication of application: **05.01.2000**
(21) Application number: 99112349.8
(22) Date of filing: 28.06.1999
(51) Int. Cl.: G03H 1/26

(54) **Holographic stereogram creating apparatus and method**

(30) Priority: 03.07.1998 JP 18927598
(71) Applicant: SONY CORPORATION, Tokyo (JP)
(72) Inventor: Kihara, Nobuhiro, c/o Sony Corporation, Shinagawa-ku, Tokyo (JP)
(74) Representative: MÜLLER & HOFFMANN Patentanwälte

(57) **Abstract**

The present invention provides a holographic stereogram creating apparatus and method capable of obtaining a more preferable reproduction of image, by arranging on an optical path of a reference light, a mask having an opening corresponding to an element hologram.

## Description

### BACKGROUND OF THE INVENTION

### Field of the Invention

The present invention relates to a holographic stereogram creating apparatus and method for creating a holographic stereogram recorded so that a real image and a computer graphic image can be observed in three dimensions.

### Description of the Prior Art

A holographic stereogram is made, for example, by photographing a subject from different observation points and using a number of images thus obtained as original images, which are successively recorded in stripe elements or dot elements on a hologram medium.

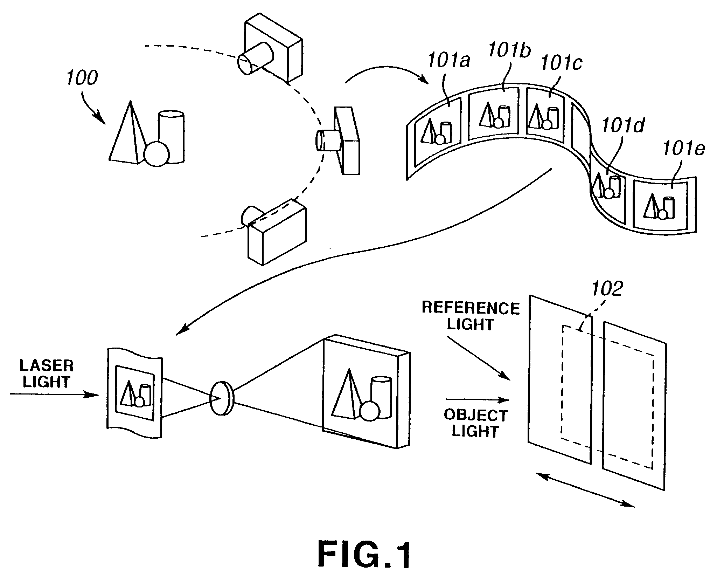

For example, in a holographic stereogram having an azimuth difference information of only the horizontal direction as shown in Fig. 1, a subject 100 is photographed successively in different horizontal directions to obtain a plurality of original images 101a to 101e, which are successively recorded as stripe type element hologram 102 on a recording medium. It should be noted that the plurality of original images recorded as element hologram on the hologram recording medium may not be the actually photographed subject, but a CAD (computer aided design) image or CG (computer graphics) image.

In this holographic stereogram, image information obtained by successively photographing a subject from different observation points in the horizontal direction is successively recorded as stripe element hologram. When this holographic stereogram is observed by both (right and left) eyes the two-dimensional image received by the right eye is different from the two-dimensional image received by the left eye. Thus, observer feels an azimuth difference and can recognize the image as a three-dimensional image.

The element hologram of the aforementioned holographic stereogram is recorded on a hologram recording medium having a photo-sensitive material as the recording material as follows. That is, when recording an element hologram on a hologram recording medium, a laser beam having a good interference is branched into two parts. One of the parts serves as a two-dimensional projection image (object light) modulated by an image display means such as a liquid crystal panel and applied onto one side of the hologram recording medium. The other part is recorded as a reference light onto the other side of the hologram recording medium. Thus, interference fringes are formed as a change in refraction factor or transmission factor of the photo-sensitive material of the hologram recording medium.

However, the holographic stereogram produced by the aforementioned method has various problems. The reproduced image is entirely dark and dark-bright contrast is not sufficient. The reproduced image is not clear because of distortion.

To cope with this, various devices have been tried for the aforementioned subject light so as to improve the quality of the reproduced image, but a sufficiently preferable image cannot be obtained.

### SUMMARY OF THE INVENTION

It is therefore an object of the present invention to provide a holographic stereogram creating apparatus and method for reproducing a holographic stereogram capable of presenting a preferable image reproduced.

We studied to solve the aforementioned problems and have found that by suppressing dispersion of the reference light applied to a hologram recording medium and improving parallelism thereof, it is possible to drastically improve the quality of a reproduced image of the holographic stereogram.

The holographic stereogram creating apparatus according to the present invention is for applying an object light on one surface (first surface) of a hologram recording medium and a reference light to the other surface (second surface) of the hologram recording medium so as to successively record each image of an azimuth difference image string as an element hologram onto the hologram recording medium, wherein a mask having an opening corresponding to the element hologram is arranged on an optical path of the reference light.

In this holographic stereogram creating apparatus, only a portion of the reference light which has passed through the opening of the mask is applied to the hologram recording medium. Since the mask opening has a shape corresponding to the element hologram, the reference light will not be applied to an adjacent region over the region where a desired element hologram is to be recorded. Accordingly, this holographic stereogram creating apparatus can suppress lowering of diffraction efficiency caused by exposure of another region by the reference light. This enables to create a holographic stereogram capable of reproducing a preferable image.

According to another aspect of the present invention, there is provided a holographic stereogram creating apparatus for applying an object light on one surface (first surface) of a hologram recording medium and a reference light to the other surface (second surface) of the hologram recording medium so as to successively record each image of an azimuth difference image string as an element hologram onto the hologram recording medium, the apparatus further including a projection optical system arranged on an optical path of the reference light for projecting the reference light onto the second surface of the hologram recording medium.

In general, a holographic stereogram is subjected to a parallel light for displaying a reproduced image. However, a holographic stereogram created by using a non-parallel light as the reference light during element hologram recording, causes distortion and obscuring when a parallel light is applied for reproduction.

On the other hand, in the holographic stereogram creating apparatus according to the present invention, the reference light is made into a parallel light by the projection optical system arranged on the optical path of the reference light before applied onto the second surface of the hologram recording medium. Accordingly, it is possible to create a holographic stereogram capable of reproducing a preferable image.

It should be noted that in the holographic stereogram creating apparatus according to the present invention, it is possible that both of the mask and the projection optical system are arranged on the optical path of the reference light.

In this case, it is possible to provide a holographic stereogram capable of reproducing a more preferable image by suppressing lowering of the diffraction and distortion in a reproduced image.

According to still another aspect of the present invention, there is provided a holographic stereogram creating method for applying an object light on one surface (first surface) of a hologram recording medium and a reference light to the other surface (second surface) of the hologram recording medium so as to successively record each image of an azimuth difference image string as an element hologram onto the hologram recording medium, wherein a mask having an opening corresponding to the element hologram is arranged on an optical path of the reference light so that the reference light passes through the mask before being applied to the second surface of the hologram recording medium.

According to this holographic stereogram creating method, application of the reference light over a predetermined region into an adjacent region is suppressed, and it is possible to obtain a hologrpahic stereogram capable of reproducing a preferable image.

According to yet another aspect of the present invention, there is provided a holographic stereogram creating method for applying an object light on one surface (first surface) of a hologram recording medium and a reference light to the other surface (second surface) of the hologram recording medium so as to successively record each image of an azimuth difference image string as an element hologram onto the hologram recording medium, wherein a projection optical system is arranged on an optical path of the reference light for projecting the reference light as a parallel light onto the second surface of the hologram recording medium.

According to this stereogram creating method, the reference light is made into a parallel light by the projection optical system provided on its optical path before applied to the second surface of the hologram recording medium. Accordingly, it is possible to create a holographic stereogram capable of reproducing a preferable image.

It should be noted that in the holographic stereogram creating method according to the present invention, both of the mask and the projection optical system may be arranged on the optical path of the reference light, so that the reference light passing through the mask is made into a parallel light by the projection optical system before applied to the second surface of the hologram recording medium.

In this case, it is possible to suppress both of lowering of diffraction and distortion in a reproduced image, so as to obtain holographic stereogram capable of reproducing a more preferable image.

### BRIEF DESCRIPTION OF DRAWINGS

Fig. 1 schematically shows a holographic stereogram creating procedure.
Fig. 2 is a cross sectional view of an essential portion of a hologram recording medium as an example.
Fig. 3 explains a photo sensitive process of a holographic material: Fig. 3A shows that a monomer is uniformly diffused into a matrix polymer; Fig. 3B shows a predetermined power light is applied to the holographic material; and Fig. 3C shows ultraviolet rays are applied to the entire surface.
Fig. 4 schematically shows a configuration example of a holographic stereogram producing apparatus.
Fig. 5 schematically shows a configuration example of an optical system of an exposure processing block.
Fig. 6 schematically shows an ordinary afocal projection optical system.
Fig. 7 shows a configuration example of an afocal projection optical system arranged on an optical path of a reference light of a holographic stereogram producing apparatus according to the present invention: Fig. 7A is a side view of the afocal projection optical system; and Fig. 7B is a plan view of the afocal projection optical system viewed from above.
Fig. 8 shows lens parameters of the aforementioned afocal projection optical system.

### DETAILED DESCRIPTION OF THE PREFERRED EMBODIMENT

Description will now be directed to an embodiment of the present invention with reference to the attached drawings. It should be noted that the present invention is not to be limited to the embodiment explained below, but it is possible to modify the embodiment within a scope of the present invention.

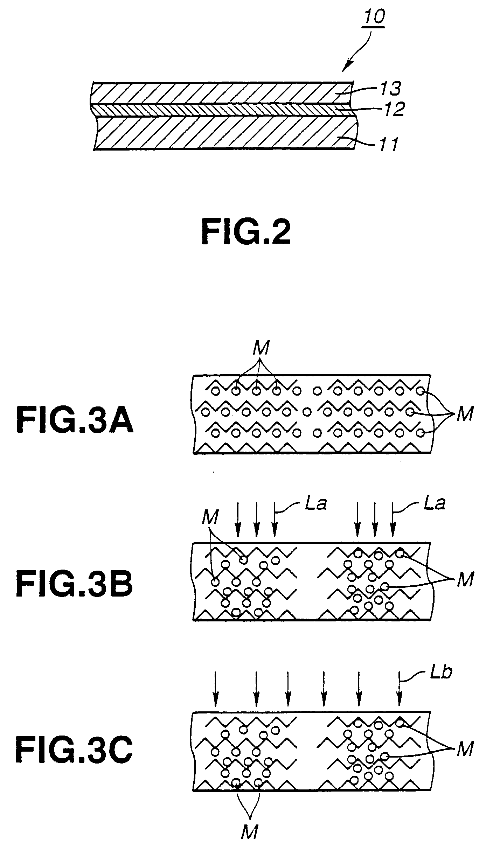

Firstly, explanation will be given on a recording medium used in a holographic stereogram according to the present embodiment with reference to Fig. 2.

As shown in Fig. 2, this recording medium 10 includes a substrate 11 made from a colorless transparent resin film or the like having a hologram recording layer 12, which is covered by a protection layer 13 made from a colorless transparent resin film.

When a three-dimensional image is recorded on this recording medium 10, as will be detailed later, a reference light comes through the substrate 11 into the hologram recording layer 12 while an object light comes through the protection layer 13 into the hologram recording layer 12, and their interference fringes is recorded on the hologram recording layer 12. Accordingly, the substrate 11 and the protection layer 13 should have optical characteristics such as little light scattering, little birefringence, and a high light transparency.

On the other hand, the hologram recording layer 12 may be made from conventional known holographic material. Especially preferable is a material in which an interference fringe generated by interference between the reference light and the object light is recorded as a change in refraction factor. In this embodiment, we used OMNI-DEX (trade name) produced by Dupont Co., Ltd. as the holographic material. This holographic material is made from an optical polymerization type photo polymer. In its initial state, as shown in Fig. 3A, monomers M are uniformly diffused in a matrix polymer. If a light La of 10 to 400 mJ/cm² is applied to the holographic material, as shown Fig. 3B, the exposed monomers M are polymerized according to the power of the light La. As a result, concentration of the monomers M changes depending on the position, causing refraction modulation. After this, as shown in Fig. 3C, ultraviolet rays Lb of 1000 mJ/cm² are applied to the entire surface to complete polymerization of the monomers M. Thus, refraction factor modulation is increased, and this refraction factor modulation is fixed.

Next, explanation will be given on a holographic stereogram creating apparatus according to the present embodiment for recording a three-dimensional image as a holographic stereogram on the aforementioned recording medium 10. Here, explanation will be given on a holographic stereogram creating apparatus in which a plurality of stripe-type element hologram is recorded onto the recording medium 10 so as to obtain an azimuth difference information in the horizontal direction. However, the present invention is not to be limited to this example but can be applied to a holographic stereogram in which dot-type element hologram is recorded on the recording medium 10 so as to produce a holographic stereogram having an azimuth difference information both in horizontal and vertical directions.

This holographic stereogram creating apparatus is an apparatus for producing a so-called one-step holographic stereogram, and the recording medium itself containing the interference fringes between the object light and reference light is output as a holographic stereogram.

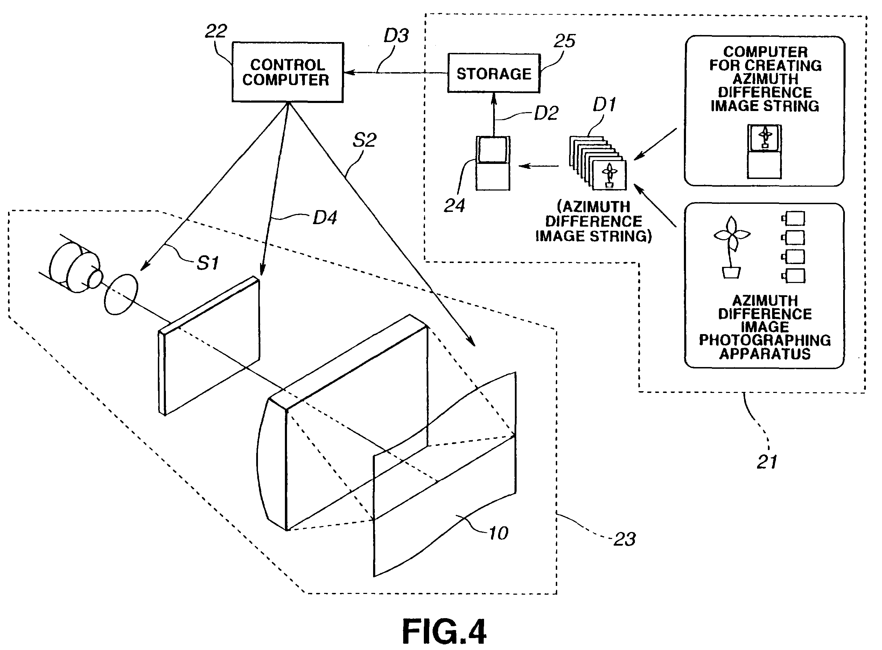

This holographic stereogram creating apparatus, as shown in Fig. 4, includes: a data processor 21 for processing subject image data; a control computer 22 for controlling the entire system; and an exposure processor 23 having an optical system for producing a holographic stereogram.

The data processor 21 reads in an azimuth difference image string D1 from an azimuth difference image string photographing apparatus, an azimuth difference image string creating computer, or the like, and the azimuth difference image string D1 is subjected to a predetermined image processing for a holographic stereogram by the image processing computer 24 such as a viewpoint conversion and a keystone distortion correction. The image data D2 which has been subjected to the predetermined image processing is recorded in a recording apparatus 25 such as a memory or hard disc.

Here, the azimuth difference image string photographing apparatus may be simultaneous photographing using a multiple-lens camera or successive photographing by a mobile camera, so that a subject is photographed from a plurality of viewpoints in horizontal directions so as to obtain an azimuth difference image string D1, which is supplied to the image processing computer 24. Moreover, the azimuth difference image string creating computer, using a technique such as CAD and CG, creates an azimuth difference image string D1 from a plurality of images containing an azimuth information and supplies the azimuth difference image string D1 to the image processing computer 24.

Moreover, when creating a holographic stereogram, the data processor 21 successively reads out an image data for each image from the storage 25 and sends out this image data D3 to the control computer 22.

The control computer 22 controls the exposure processor 23, so that images based on the image data D3 supplied from the data processor 21 are successively recorded as a stripe-type element hologram on the recording medium 10.

Here, the control computer 22, as will be detailed later, controls a shutter, a display apparatus, and a printer head block which are provided in the exposure processor 23. That is, the control computer 22 sends a control signal S1 to the shutter to control opening and closing of the shutter; Moreover, the control processor 22 supplies the image data D4 to the display apparatus so that the display apparatus displays an image based on the image data D4. The control computer sends out a signal S2 to the printer head block, so as to control feed operation of the recording medium 10 by the printer head block.

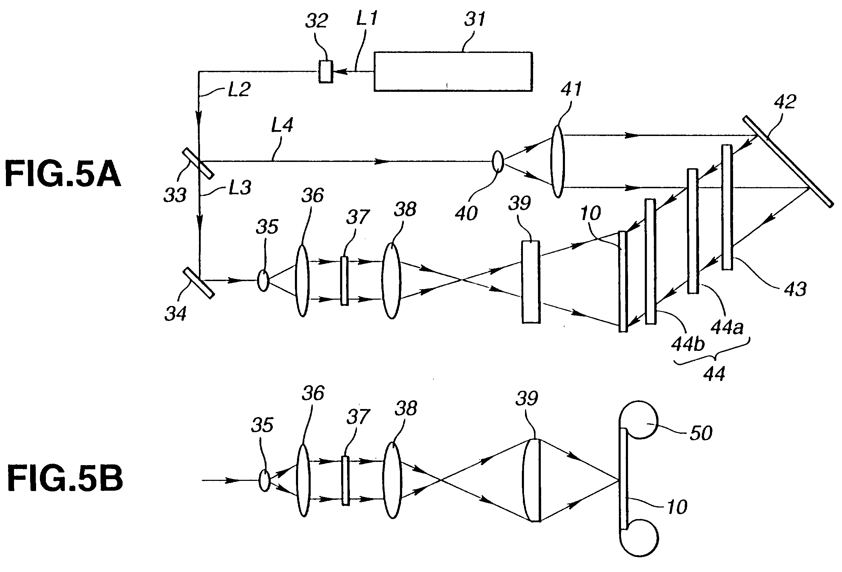

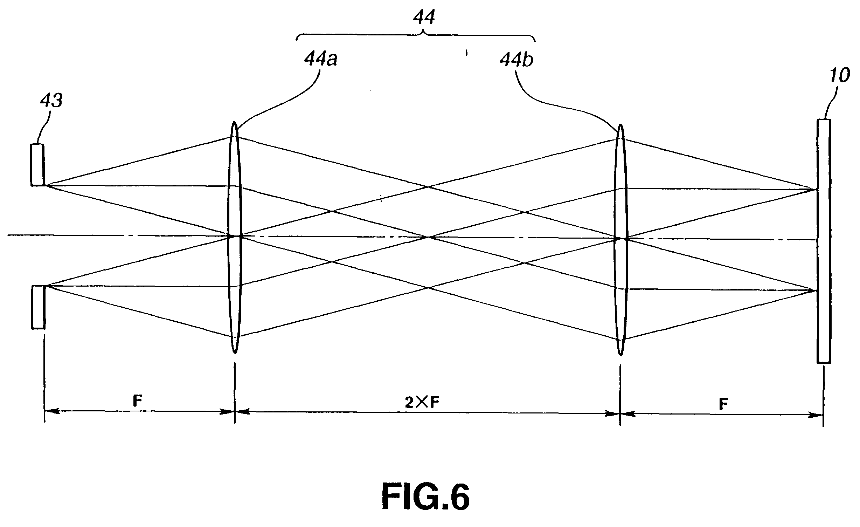

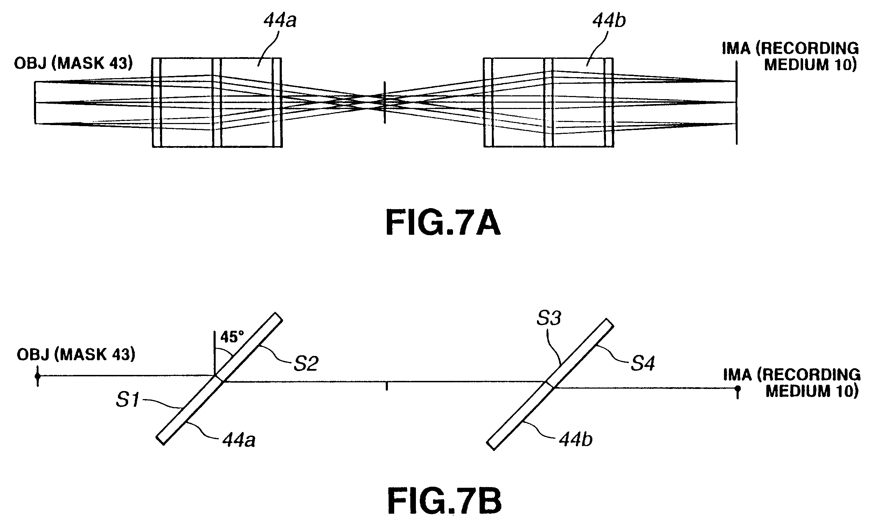

The exposure processor 23 will be detailed below with reference to Fig. 5 to Fig. 7. Fig. 5A shows an entire optical system of the exposure processor 23 viewed from above, and Fig. 5B shows the entire optical system of the exposure processor 23 viewed from side. Fig. 6 is for explanation of an ordinary afocal projection optical l systm, and Fig. 7 shows an afocal projection optical system applied to the exposure processor 23 of the holographic stereogram according to the present embodiment. It should be noted that in the holographic stereogram creating apparatus according to the present invention, the optical system of the exposure processor 23 is not to be limited to the example given here, but can be modified in various ways within the scope of the invention. For example, it is possible to modify the incident direction of the reference light, the number and type of lenses, combination of the lenses, and the like.

As shown in Fig. 5A, the exposure processor 23 includes: a laser light source 31 for emitting a laser beam of a predetermined wavelength; and a shutter 32 and a half mirror 33 arranged on an optical path of the laser beam L1 from the laser light source 31.

The aforementioned shutter 32 is controlled by the control computer 22. The shutter 32 is closed when the recording medium 10 is not to be exposed, and opened when the recording medium is to be exposed. It should be noted that the laser beam on and off are switched by using the shutter 32, but when the laser light source 31 is a light source capable of emitting a stable laser beam at the rise such as a semiconductor laser, the laser light source itself may be turned on and off without using the shutter 32.

The half mirror 33 functions to divide the laser beam L2 which has passed through the shutter 32 into a reference light and an object light. The light L3 which has passed through the half mirror 33 becomes the object light, and the light L4 which is reflected by the half mirror 33 becomes the reference light.

As shown in Fig. 5A and Fig. 5B, on the optical path of the light L3 which has passed through the half mirror 33, there are provided: a total reflection mirror 34 for reflecting the light from the half mirror 33; a spatial filter 35 having a convex lens and a pin hole; collimator lens 36 for making the object light a parallel light; a display apparatus 37 for displaying an image to be recorded; a projection lens 38 for projecting the object light onto the recording medium 10, and a cylindrical lens 39 for emitting the object light onto the recording medium 10 in this order.

The light L4 which has passed through the half mirror 33 is reflected by the total reflection mirror 34 and passes through the spatial filter 35 so as to become a diffused light from a point light source. Next, the light is made a parallel light by the collimator lens 36 before entering the display apparatus 37. Here, the display apparatus 37 is, for example, a transparent-type image display apparatus having a liquid crystal panel, and displays an image based on the image data D4 fed from the control computer 22. The light which has passed through the display apparatus 37 is modulated according to the image displayed on the display apparatus 37 and introduced via the projection lens 38 into the cylindrical lens 39.

The light which has passed through the display apparatus 37 is focused in the horizontal direction by the cylindrical lens 39 and the focusing light is supplied as the object light into the recording medium 10. That is, in this exposure processor 23, projection light from the display apparatus 37 is supplied as a stripe-type object light into the recording medium 10. It should be noted that when producing a reflection-type holographic stereogram, although not depicted, a one-dimensional diffusion plate is provided immediately before the recording medium 10, so that the light horizontally focused by the cylindrical lens 39 is diffused in the longitudinal direction of the stripe-type element hologram, which is applied to the recording medium 10. This assures the viewpoint angle in the vertical direction.

On the other hand, on the optical path of the light LA reflected by the half mirror 33, there is provided an optical system for the reference light, including: a cylindrical lens 40; a collimator lens 41 for making the reference light a parallel light; a total reflection minor 42 for reflecting the parallel light from the collimator lens 41; a mask 43 for intercepting an unnecessary portion of the light reflected by the total reflection minor 42; and projection optical system 44 for projecting the light which has passed through the mask 43, as a parallel light onto the recording medium 10 in this order.

The light reflected by the half minor 33 is firstly diffused by the cylindrical lens 40 and then made into a parallel light by the collimator lens 41 before reflected by the total reflection mirror 42. The light reflected by the total reflection minor 42 is emitted to the mask 43.

The mask 43 has an opening whose shape corresponds to the element hologram to be recorded on the recording medium 10. And only the light which has passed through this opening from the light reflected by the total reflection mirror 42 is emitted to the projection optical system 44. Thus, the mask 43 passes only the light required for recording an element hologram of a desired shape and intercepts an unnecessary light portion.

In the holographic stereogram creation apparatus according to the present invention, the mask 43 is provided on the optical path of the reference light. Accordingly, the reference light is recorded on a region where a desired element hologram is to be recorded and there is no danger of recording the reference light in a region adjacent to that region. Consequently, in this holographic stereogram creation apparatus, it is possible to suppress lowering of the diffraction and create and to obtain a holographic stereogram capable of reproducing a preferable image.

The projection optical system 44 is constituted by two cylindrical lenses: a first cylindrical lens 44a and a second cylindrical lens 44b. This projection optical system 44 is preferably constituted as an afocal projection optical system capable of projecting on the recording medium, the light which has passed through the mask 43, by magnification factor approximately one for image formation.

As shown in Fig. 6, the afocal projection optical system includes a first cylindrical lens 44a and a second cylindrical lens 44b, both having an identical focal distance and arranged as follows. That is, if F is assumed to be the focal distance of the first and the second cylindrical lenses 44a and 44b, the distance between the mask 43 and the first cylindrical lens 44a is F, the distance between the second cylindrical lens 44b and the recording medium 10 is also F, and the distance between the first cylindrical lens 44a and the second cylindrical lens 44b is 2 × F.

Thus, when the projection optical system 44 is an afocal projection optical system, if the mask 43 has an opening whose shape is identical to the shape of a necessary hologram, the reference light is projected onto the recording medium 10 as a shape identical to the element hologram, and there is no danger of radiation of the desired hologram in an adjacent region, i.e., over the region for a recording the desired element hologram. Moreover, because the projection optical system 44 is constituted as the afocal projection optical system, the reference light can be applied to the recording medium 10 with a high parallelism of the reference light. Accordingly, by using the holographic stereogram creation apparatus in which the aforementioned projection optical system 44 is provided on the optical path of the reference light, it is possible to create a holographic stereogram capable of reproducing a preferable image without distortion or obscuring.

When actually creating a holographic stereogram, it is not uncommon that the reference light is applied with a predetermined angle to the recording medium 10. This is because when obtaining a reproduced image from a holographic stereogram, light is applied to this holographic stereogram with a slanting angle, and when the light application angle is matched with the radiation angle of the reference light, it is possible to obtain an optimal reproduced image. Accordingly, when creating a holographic stereogram, it is preferable that the reference light be applied to the recording medium 10 with inclination matched with the light applied when obtaining a reproduced image.

If the aforementioned projection optical system 44 is provided as it is on the optical path of the reference light applied to the recording medium 10 with an inclination, it is impossible to maintain the parallelism of the reference light because of different focal distances. Accordingly, in this case, it is necessary to set the lens parameters of the projection optical system 44 in accordance with the application angle of the reference light.

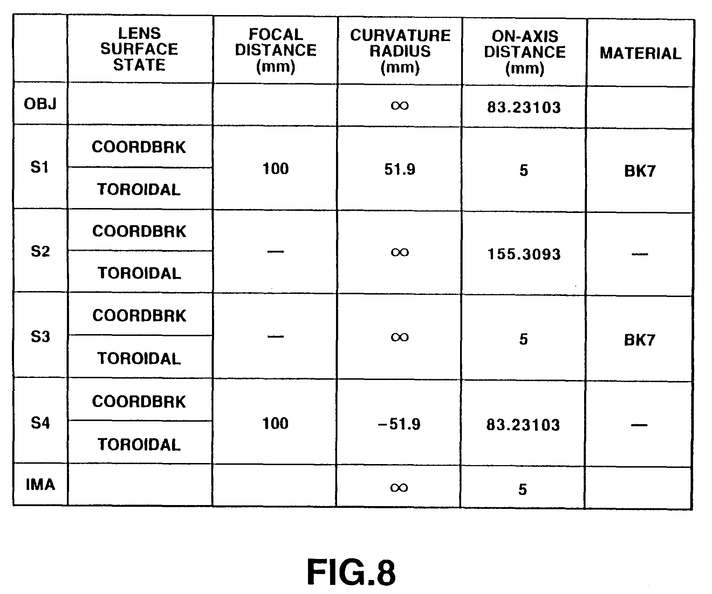

Here, explanation will be given on the projection optical system 44 arranged on the optical path of the reference light in a holographic stereogram creation apparatus in which reference light is applied to the recording medium 10 at 45 degrees. It should be noted that Fig. 7A shows the projection optical system 44 viewed from side, and Fig. 7B shows the projection optical system 44 viewed from above. Moreover, Fig. 8 shows lens parameters of the projection optical system 44. Here, as software for lens design is used the optical design software ZEMAX (trade name) produced by Focus Software Inc.

In the holographic stereogram creation apparatus which applies the reference light to the recording medium 10 with inclination of 45 degrees, it is assumed that the first cylindrical lens 44a has a surface S1 (hereinafter, referred to as a first lens surface) at the side of the mask 43 and a surface S2 (hereinafter, referred to as a second lens surface) at the side of the second cylindrical lens 44b; and the second cylindrical lens 44b has a surface S3 (hereinafter, referred to as a third lens surface) at the side of the first cylindrical lens 44a and a surface S4 (hereinafter, referred to as a fourth lens surface) at the side of the recording medium 10. When the projection optical system 44 is designed so that the first to the fourth lens surfaces S1 to S4 have parameter values as shown in Fig. 8, the projection optical system 44 can be constituted as an afocal projection optical system in the same way as the projection optical system 44 explained with reference to Fig. 6.

That is, the first cylindrical lens 44a has the first surface S1 as a cylindrical surface of curvature radius 51.9 mm and the focal distance 100 mm and the second surface S2 as a plane surface. The first cylindrical lens 44a is formed by using BK7 in such a manner that the on-axis distance between the first lens surface S1 and the second lens surface S2 is 5 mm. This first cylindrical lens 44a is arranged at 45 degrees with respect to the optical path of the reference light in such a manner that the on-axis distance between the first surface S1 and the mask 43 is approximately 83.2 mm.

Moreover, the second cylindrical lens 44b has the third surface S3 as a plane surface and the fourth surface S4 as a cylindrical surface of curvature radius -51.9 mm and the focal distance 100 mm. The second cylindrical lens 44b is formed by using BK7 in such a manner that the on-axis distance between the third lens surface S3 and the fourth lens surface S4 is 5 mm. This second cylindrical lens 44b is arranged at 45 degrees with respect to the optical path of the reference light in such a manner that the on-axis distance between the fourth surface S4 and the recording medium 10 is approximately 83.2 mm and the on-axis distance between the third surface S3 and the second surface S2 is approximately 155.3 mm.

It should be noted that in Fig. 8, "COORDBRK" means that the lens surface is inclined by 45 degrees with respect to the optical path, and "TOROIDAL" means that the lens surface is a lens surface constituting a cylindrical lens.

When the projection optical system is constituted as described above, even in the holographic stereogram creation apparatus in which the reference light is applied at an angle 45 degrees to the recording medium 10, it is possible to constitute the projection optical system 44 as an afocal projection optical system and apply the reference light to the recording medium 10 while maintaining a high parallelism of the reference light.

In the holographic stereogram having the aforementioned configuration, an object light which has passed through the half mirror 33 passes through the protection layer 13 of the recording medium 10 and comes into the holograph recording layer 12 while a reference light reflected by the half minor 33 passes through the substrate 11 of the recording medium 10 into the hologram recording layer 12. That is, the object light comes into the one of the main surfaces of the recording medium 10 with an optical path almost vertical to the recording medium 10 while the reference light comes into the other surface of the recording medium with a predetermined angle with respect to the recording medium 10. Thus, the object light and the reference light interferes each other in the hologram recording layer 12, causing an interference fringe, which is recorded as a refraction change in the hologram recording layer 12.

The recording medium is arranged in a predetermined manner on the printer head block 50 operating under control of the of the control computer. Each time an image is recorded as an element hologram on the recording medium 10, the printer head block 50, according to the control signal S2 from the control computer 22, intermittently feeds the recording medium 10 for one element hologram. Thus, the image based on the image data D which has been processed in the data processor 21 is successively recorded as an element hologram continuously in the horizontal direction on the recording medium 10.

Then, in the printer head block 50, ultraviolet rays are applied to the recording medium 10 on which a plurality of element holograms are recorded. This completes polymerization of the monomers M in the hologram recording layer 12 of the recording medium 10. Furthermore the recording medium 10 which has been subjected to radiation of the ultraviolet rays is subjected heating process so that the recorded images are fixed and cut of by a cutter or the like. Thus, an independent one holographic stereogram is produced.

In the holographic stereogram creating apparatus according to the present invention, the mask 43 having an opening corresponding to the shape of the element hologram is provided on the optical path of the reference light. Accordingly, there is no danger of applying the element hologram in an adjacent region over a predetermined region where the desired element hologram is to be recorded. Consequently, in this holographic stereogram creating apparatus, it is possible to suppress lowering of diffraction effect, enabling to obtain a holographic stereogram capable of reproducing preferable images.

Moreover, in this holographic stereogram creating apparatus, on the optical path of a reference light, there is provided the projection optical system 44 for projecting the reference light as a parallel light to the recording medium 10. Accordingly, it is possible to create a holographic stereogram capable of reproducing a more preferable image without distortion or obscuring.

It should be noted the explanation has been given on an example in which the collimator lens 41 is provided on the optical path and the reference light applied to the mask 43 is a parallel light. However, in the holographic stereogram creating apparatus according to the present invention, even if the reference light applied to the mask 43 is a non-parallel light, it is possible to project the reference light as a parallel light to the recording medium by properly setting the conditions such as the focal distances and arragement position of the first and the second cylindrical lenses 44a and 44b.

Moreover, the explanation has been given on the reflection type holographic stereogram. However, the present invention is not to be limited to this type and can also be applied to a transparent-type holographic stereogram and an edge-lit type holographic stereogram, or the like.

Moreover, the explanation has been given on an example of monochromatic holographic stereogram, the present invention can also be applied a colored holographic stereogram. When creating a colored holographic stereogram, for example, three lights corresponding to the three primary colors can be used as the lights for recording.

As is clear from the aforementioned, in the holographic stereogram creating apparatus according to the present invention, on the optical path of the reference light, there is provided a mask having an opening of a shape corresponding to the element hologram and it is possible to accurately define the range of the reference light applied to the recording medium.

Accordingly, in this holographic stereogram creating apparatus it is possible to suppress lowering of the diffraction efficiency and to create a holographic stereogram capable of reproducing a preferable image.

Moreover, in the holographic stereogram creating apparatus according to the present invention, on the optical path of the reference light, there is arranged the projection optical path for projecting the reference light as a parallel light to the recording medium. Accordingly, it is possible to uniformly apply the reference light on a predetermined position of the recording medium. Thus, it is possible to create a holographic stereogram capable of reproducing a preferable image without distorsion or obscuring.

Moreover, in the holographic stereogram creating method according to the present invention, on the optical path of the reference light, there is provided a mask having an opening of a shape corresponding to the element hologram. Accordingly, it is possible to accurately define the range of the reference light applied to the recording medium.

Accordingly, in this holographic stereogram creating method, it is possible to suppress lowering of the diffraction efficiency and to create a holographic stereogram capable of reproducing a preferable image.

Moreover, in the holographic stereogram creating apparatus according to the present invention, on the optical path of the reference light, there is arranged the projection optical path for projecting the reference light as a parallel light to the recording medium. Accordingly, it is possible to uniformly apply the reference light on a predetermined position of the recording medium. Thus, it is possible to create a holographic stereogram capable of reproducing a preferable image without distortion or obscuring.

## Claims

1. A holographic stereogram creating apparatus for applying an object light on one surface (first surface) of a hologram recording medium and a reference light to the other surface (second surface) of the hologram recording medium so as to successively record each image of an azimuth difference image string as an element hologram onto the hologram recording medium,
wherein a mask having an opening corresponding to the element hologram is arranged on an optical path of the reference light.

2. A holographic stereogram creating apparatus as claimed in Claim 1, wherein the opening of the mask has a rectangular shape and stripe-type element holograms are successively recorded on the hologram recording medium.

3. A holographic stereogram creating apparatus as claimed in Claim 1, the apparatus further comprising a projection optical system arranged between the mask and the hologram recording medium, so that the reference light which has passed through the mask is projected as a parallel light with respect to the second surface of the hologram recording medium.

4. A holographic stereogram creating apparatus as claimed in Claim 3, wherein the projection optical system is an afocal optical system.

5. A holographic stereogram creating apparatus for applying an object light on one surface (first surface) of a hologram recording medium and a reference light to the other surface (second surface) of the hologram recording medium so as to successively record each image of an azimuth difference image string as an element hologram onto the hologram recording medium,
the apparatus further comprising a projection optical system arranged on an optical path of the reference light for projecting the reference light onto the second surface of the hologram recording medium.

6. A holographic stereogram creating apparatus as claimed in Claim 5, wherein the projection optical system is an afocal optical system.

7. A holographic stereogram creating method for applying an object light on one surface (first surface) of a hologram recording medium and a reference light to the other surface (second surface) of the hologram recording medium so as to successively record each image of an azimuth difference image string as an element hologram onto the hologram recording medium,
wherein a mask having an opening corresponding to the element hologram is arranged on an optical path of the reference light so that the reference light passes through the mask before being applied to the second surface of the hologram recording medium.

8. A holographic stereogram creating method as claimed in Claim 7, wherein the mask has a rectangular shape and stripe-type element holograms are successively recorded on the hologram recording medium.

9. A holographic stereogram creating method as claimed in Claim 8, wherein a projection optical system is arranged between the mask and the hologram recording medium, so that the reference light which has passed through the mask is projected as a parallel light with respect to the second surface of the hologram recording medium.

10. A holographic stereogram creating method as claimed in Claim 9, wherein the projection optical system is an afocal optical system.

11. A holographic stereogram creating method for applying an object light on one surface (first surface) of a hologram recording medium and a reference light to the other surface (second surface) of the hologram recording medium so as to successively record each image of an azimuth difference image string as an element hologram onto the hologram recording medium,
wherein a projection optical system is arranged on an optical path of the reference light for projecting the reference light as a parallel light onto the second surface of the hologram recording medium.

12. A holographic stereogram creating method as claimed in Claim 11, wherein the projection optical system is an afocal optical system.
